Europäisches Patentamt

(19) European Patent Office

Office européen des brevets

(11) Publication number: **0 067 755**

**A1**

(12) # EUROPEAN PATENT APPLICATION

(21) Application number: **82400992.2**

(22) Date of filing: **27.05.82**

(51) Int. Cl.³: **H 02 K 53/00**

(30) Priority: **27.05.81 US 267449**

(43) Date of publication of application:
**22.12.82 Bulletin 82/51**

(84) Designated Contracting States:
**AT BE CH DE FR GB IT LI LU NL SE**

(71) Applicant: **Jamison, Larry T.**
**P.O.Box Drawer L**
**Nettleton Mississippi 38858(US)**

(72) Inventor: **Jamison, Larry T.**
**P.O.Box Drawer L**
**Nettleton Mississippi 38858(US)**

(74) Representative: **Lecca, Jean et al,**
**CABINET PLASSERAUD 84, rue d'Amsterdam**
**F-75009 Paris(FR)**

(54) Energy source employing electrical energizer.

(57) An energy producing system is provided which produces energy for use, for example, in an electric vehicle or in a home power plant. The system includes an electrical energizer (60) including a double wound rotor and a double wound stator, for producing electrical energy which is stored in the system, e.g., in an battery (66) storage arrangement, which provides initial energization of the system. The stored energy is supplied to an electrical motor (68) which drives the energizer (60) to thereby create additional energy. The energizer (60) is able to supply the needs of the system as well as to power a load.

FIG. 2

EP 0 067 755 A1

1

ENERGY SOURCE EMPLOYING
ELECTRICAL ENERGIZER.

The present invention relates to energy producing systems and, more particularly, to an electrical energizer-motor system for providing energy, e.g., for an automotive vehicle or as part of a home energy plant.

With the advent of the so-called "energy crisis" and the consequent search for alternative energy sources as substitute for oil, considerable attention has been focussed on automotive vehicles as chief users of oil products. One aspect of this search has fostered renewed interest in electrically driven vehicles such as electric cars and the like. A principal shortcoming of prior art electrical vehicles has been the need to recharge the batteries which provide the power for the electrical motor drive system.

The present invention overcomes this problem through the provision of electrical energizer-motor system which produces more energy than is expended, thereby enabling the excess energy to be stored in the battery system and to be drawn upon as required. Thus, the need for recharging of the batteries associated with conventional electrical vehicles is eliminated with the system of the invention. It should be noted that while the system of the invention has enormous potential in connection with the use thereof in electrical vehicles, the system clearly is not limited to such use and would obviously be advantageous when used, for example, as the energy source for a home energy plant, as well as in many other applications.

In accordance with the invention, an energy producing system of the type described above is provided which comprises an electrical "energizer" comprising at least one double wound stator and at least double wound, shaft-mounted rotor located within a housing, electrical
energy being collected from the rotor through a suitable
electrical take-off device and being available for utilization by the system ; and an electrical motor, powered
from the energizer, for driving the rotor shaft of the
energizer. A battery arrangement is used to initially
supply energy to the system and, as stated above, the
excess energy generated by the energizer over and above
that required by the system, and the system load, is
stored through charging of the batteries. The motor includes an armature including a plurality of winding
slots therein and a plurality of windings, at least
some of the windings being wound into two circumferentially spaced slots in the armature, i.e., such a winding is wound through a first slot (e.g., slot #1) and
returned through a second spaced slot (e.g., slot #5).
Depending on the energy demands, the energizer may include a pair of stators and rotors, with the rotors
being mounted on a common shaft. The motor is preferably
energized through an arrangement of a commutator and
plural brushes, while a slip ring and associated brushes
connected to an output bridge circuit form the energy
take-off means for the energizer.

Other features and advantages of the invention will be set forth in, or apparent from, the detailed description of the preferred embodiments which follows.

Figure 1 is a partially sectioned elevational
view of the electrical "energizer" of the invention ;

Figure 2 is a block diagram of the overall
energy producing system of the invention ;

Figure 3 is a partially sectioned side elevational view of a modified electrical motor constructed
in accordance with the invention ;

Figure 4 is an exploded perspective view of
the basic components of the motor of Figure 3 ;

Figure 5 is an end view of the brush holder also illustrated in Figure 4 ; and

Figures 6 and 7 show details of the winding pattern of the motor of Figure 3.

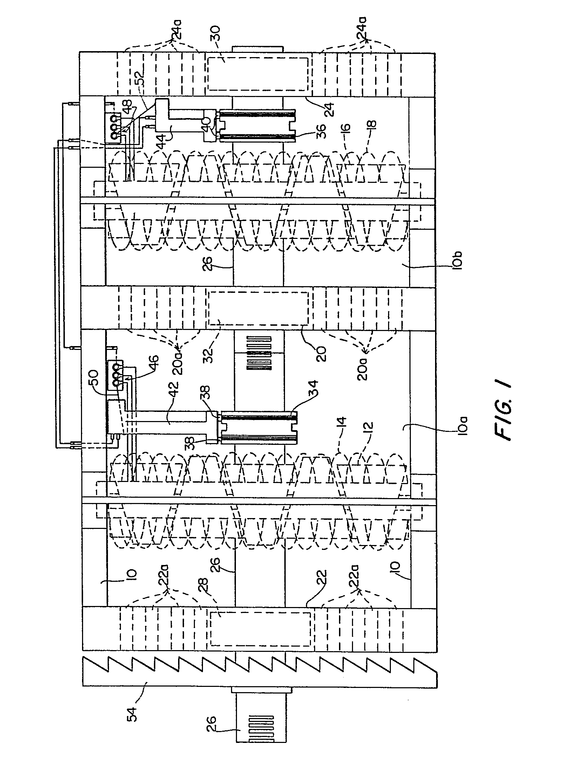

Referring to Figure 1, a preferred embodiment of the "energizer" device of the invention is shown. The device includes a jousing 10 in which are located, in a first chamber or compartiment 10a, a first rotor 12 and a first stator 14 and, in a second compartment 10b, a second rotor 16 and a second stator 18. It should be noted that although two stator-rotor combinations are employed in this embodiment, a single rotor-stator combination can be used for some applications. Housing 10 is divided into the compartments 10a and 10b by acenter plate 20 and includes a pair of end plates 22 and 24. Both the rotors 12, 16 and the stators 14, 18 are double wound and the rotors 12, 16 are nested within respective stators 14, 18 and mounted for rotation on a common shaft 26. Shaft 26 extends longitudinally through housing 10 and is mounted on bearings 28 and 30 supported by end plates 22, 24 and a further bearing 32 supported by central plate 20.

A pair of slip rings 34 and 36 are mounted on shaft 26 and cooperate with respective brush pairs 38 and 40. Slip rings 34 and 36 are connected to rotors 12 and 16, respectively, and permit the current flowing in the rotor windings to be collected through the associated pairs of brushes 38, 40. Brush pairs 38, 40 are mounted on respective brush holders 42 and 44. The terminals of respective bridge circuits 46 and 48 are respectively connected to stators 14 and 18 while conversion bars 50 and 52 are connected to brush holders 42 and 44, as indicated.

A cooling fan 54 is also mounted on shaft 26 and a plurality of apertures 20a, 22a, and 24a are provided in center plate 20 and end plates 22, 24, respectively, to promote cooling of the device.

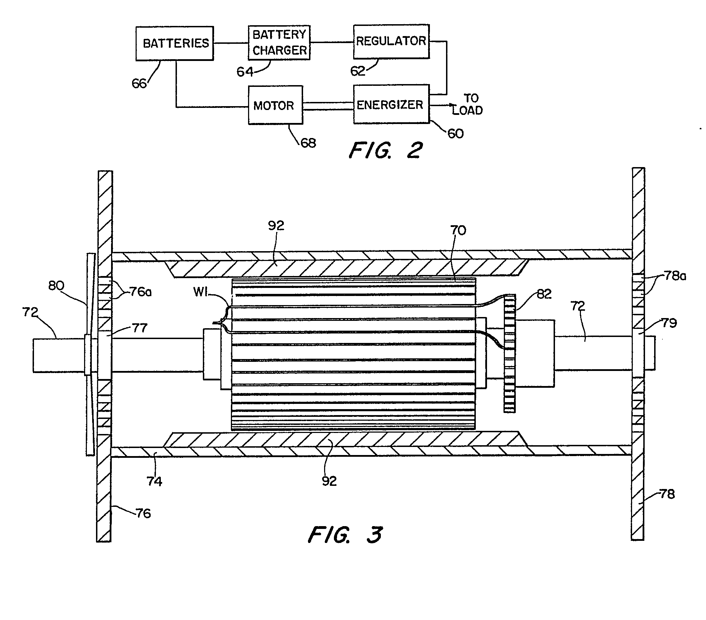

The energizer of Figure 1 is preferably incorporated in a system such as shown in a highly schematic manner in Figure 2 wherein the output of the energizer is used in supplying the energy for driving a motor. To this end, the energizer, which is denoted 60 in Figure 2, is connected through a regulator 62 to battery charger 64 for batteries 66 connected to a motor 68. These batteries 66 are used to provide initial energization of the system as well as to store energy produced by the energizer 60. It will be understood that the energizer 60 provides energy enough to power motor 68 (which, in turn, drives energizer 60 through rotation of shaft 26) as well as to provide for storage of energy in the system. It will also be appreciated that the system illustrated schematically in Figure 2 includes suitable controls (switches, rheostats, sensors, etc) to provide initial energization as well as appropriate operational control of the system.

In a preferred embodiment, motor 68 is of the form shown in Figure 3. As illustrated, the motor is of a generally conventional form (with exceptions noted below) and comprises an armature 70 mounted on a shaft 72 within housing 74. Housing 74 includes a pair of end plates 76 and 78 which mount shaft bearings 77 and 79. Apertures 76a and 78a are provided in end plates 76, 78 and a cooling fan 80 is mounted on shaft 72 to provide cooling.

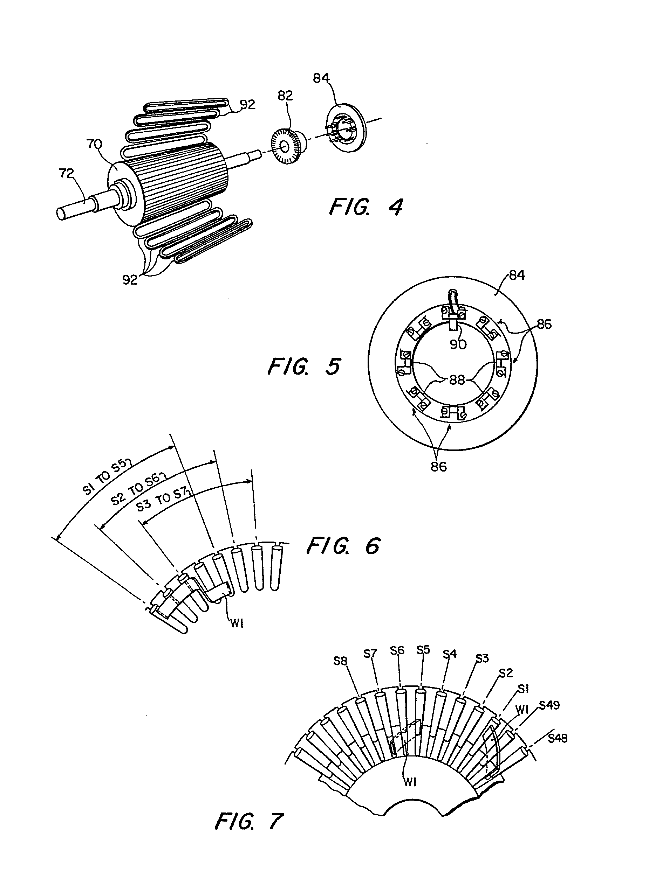

A commutator 82 is also mounted on shaft 72 and cooperates with associated brushes (not shown in Figure 1) to conduct current to the windings of armature 70. This cooperation is shown best in Figure 4 which is an exploded view illustrating the armature 70, commutator 82 and a brush holder 84. As shown in Figure 5, the brush holder 84 includes eight brush mounts 86 each of which defines a slot 88 in which a pair of brushes is mounted. One brush 90 is shown in Figure 5, it being understood that two such brushes are mounted in each slot 88 so that sixteen brushes are required.

The motor of Figures 3 to 6 includes eight pole shoes (not shown) which are secured to housing 74 and which serve to mount eight field coils or windings 92 (see Figures 3 and 4) about the periphery of armature 72 in spaced relationship thereto.

An important feature of the motor of Figures 3 to 6 concerns the manner in which the windings for armature 70 are wound. As illustrated in Figures 3 and Figures 6 and 7, a typical winding WI is wound in two slots, with the illustrated winding being doubled back and continuing from armature slot S1 to armature slot S5 (see Figures 3 and 6). The ends of the winding extend from slots S1 and S5 to the commutator 82, as shown in Figures 3 and 7. Similarly, the winding in slot S2 continues to slot S6, the winding of slot S3 continues to slot S7, and so on for the forty-nine windings.

In a specific preferred embodiment, the motor described above is a 48-volt, 412 horsepower motor having a top operating speed of 7,000 rpm. A rheostat control (not shown) is used to control the input voltage and, as discussed above, the motor is powered from the energizer of Figure 1. It will be appreciated that the energy take-off from the system is preferably from the output shaft of the motor although electrical energy may also be tapped off from the energizer output.

Although the invention has been described in relation to exemplary embodiments thereof, it will be understood by those skilled in the art that variations and modifications can be effected in these exemplary embodiments without departing from the scope and spirit of the invention.

CLAIMS

1. A energy producing system providing an output for utilization by a utilization device, said system comprising :

an electrical energizing means comprising a housing (10) ; at least one double wound stator (14 or 18) located within said housing ; at least one double wound rotor (12 or 16) located within said housing ; a rotor shaft (26), supported in said housing, on which said double wound rotor is mounted ; and energy take-off means (34 or 36), including means mounted on said shaft and connected to said rotor, for collecting electrical energy from said rotor for withdrawal at least one stationary output ;

motor means (68), including means connected to said electrical energizer means to provide energization of said motor means, for driving said rotor shaft of said energizer, said motor means including an armature (70) having a plurality of winding slots (S1 to S49) therein and a plurality of windings (W1) wound in said slots, at least some said windings (W1) being wound in two circumferentially spaced slots (S1 and S5) in said armature ; and

energy supply means (66) for supplying electrical energy to said motor means at least during initial energization of said motor means and being connected to said output of energizing means for receiving energy from said energizing means and for supplying said energy to said motor means during the operation of said motor means.

2. A system as claimed in Claim 1 wherein said energizing means includes a pair of said rotors (12, 16) and a pair of said stators (14, 18), said rotors being mounted on a common shaft (26).

3. A system as claimed in Claim 1 wherein said energy take-off means comprises means, including a slip ring (34 or 36) and at least one brush (38 or 40) for collecting electrical current from the windings of said rotor, said brush being connected to a bridge circuit (46 or 48) connected to said output.

4. A system as claimed in Claim 1 wherein said motor means includes an commutator (82) through which energy is supplied to the windings of said armature.

5. A system as claimed in Claim 4 wherein the same winding (W1) is wound in the first and fifth slot positions of the armature of said motor and the ends of that winding are connected to two spaced positions located around the periphery of the commutator (see Figure 3).

FIG. 1

BATTERIES — BATTERY CHARGER — REGULATOR

66

64

62

MOTOR — ENERGIZER — TO LOAD

68

60

## FIG. 2

92   70

80   76a   WI   82   72   78a

72   77   79

74   92   78

76

## FIG. 3

FIG. 4

FIG. 5

FIG. 6

FIG. 7

0067755

European Patent Office

**EUROPEAN SEARCH REPORT**

Application number

EP 82 40 0992

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A- 934 808 (ACKERMANN)<br>* pages 1,2; figures 1,2 *<br><br>--- | 1-5 | H 02 K 53/00 |
| Y | FR-A- 378 593 (SAVREUX)<br>* page 1, figure *<br><br>--- | 1 | |
| A | FR-A- 943 541 (ROZAN)<br><br>* pages 1,2; figures 1,2 *<br><br>--- | 1,2,4, 5 | |
| A | FR-A-2 471 070 (BLANC)<br>* page 3, lines 31-40; page 4, lines 1-8; page 4, lines 29-40; page 5, lines 1-16; figure 5 *<br><br>--- | 1,3 | |
| A | GB-A- 144 175 (HUGH)<br>* figure 2 *<br><br>----- | 5 | TECHNICAL FIELDS SEARCHED (Int. Cl. ³)<br><br>H 02 K |

The present search report has been drawn up for all claims

| Place of search | Date of completion of the search | Examiner |
|---|---|---|
| THE HAGUE | 31-08-1982 | TIO K.H. |